# EUROPEAN PATENT SPECIFICATION

(11) **EP 3 809 525 B1**
(45) Date of publication and mention of the grant of the patent: **04.06.2025**
(21) Application number: 19853699.7
(22) Date of filing: 27.08.2019
(51) Int. Cl.: H01Q 1/24, H01Q 25/00, H01Q 3/30, H01Q 9/28, H01Q 1/22, H01Q 21/08

(54) **ELECTRONIC DEVICE COMPRISING ANTENNA ARRAY**
ELEKTRONISCHES GERÄT MIT GRUPPENANTENNE
DISPOSITIF ÉLECTRONIQUE COMPORTANT UN RÉSEAU D'ANTENNES

(30) Priority: 28.08.2018 KR 20180101030
(43) Date of publication of application: 21.04.2021
(73) Proprietor: Samsung Electronics Co., Ltd., Suwon-si 16677 (KR); Postech Academy-Industry Foundation, Gyeongsangbuk-do, 37673 (KR)
(72) Inventor: KIM, Yeonwoo, Suwon-si Gyeonggi-do 16677 (KR); HONG, Wonbin, Suwon-si Gyeonggi-do 16677 (KR); KWON, Wonpyo, Suwon-si Gyeonggi-do 16677 (KR); PARK, Sehyun, Suwon-si Gyeonggi-do 16677 (KR); YUN, Sumin, Suwon-si Gyeonggi-do 16677 (KR)
(74) Representative: HGF
(86) International application number: PCT/KR2019/010949
(87) International publication number: WO 2020/045963

(56) References cited:
- KR-A- 20170 077 787
- KR-A- 20170 135 980
- KR-B1- 101 212 354
- KR-B1- 101 874 077
- US-A1- 2010 167 666
- US-A1- 2015 070 228
- US-A1- 2016 322 714
- US-A1- 2017 302 306
- US-A1- 2018 026 341
- US-B1- 6 239 764

## Description

### [Technical Field]

Embodiments disclosed in this specification relate to an electronic device including an antenna array.

### [Background Art]

As an electronic device has been recently popularized, the network traffic of the electronic device (e.g., a smartphone) is sharply increasing. To make the traffic better, a next-generation mobile communication technology using a signal in an ultra-high-frequency band, for example, a 5th-generation (5G) mobile communication technology is being actively developed. The available bandwidth may become wider by using the 5G mobile communication technology, and thus, a significant amount of information may be transmitted and/or received.
US 2017/302306 discloses an electronic device with millimetre wave antennas comprising phase arrays comprising multiple antenna elements that can be used to direct a beam in a desired direction.
US 2016/322714 describes antennas for a wireless electronic device including an array of dual radiating elements suitable for use at millimetre band radio frequencies.
US 2010/0167666 discloses integration approaches for mm-wave array type architectures using multilayer substrate technologies. For instance, an apparatus may include a first substrate layer, a second substrate layer, and a third substrate layer. The first substrate layer has a first plurality of array elements, and the second substrate layer has a second plurality of array elements. The third substrate layer has an integrated circuit to exchange one or more radio frequency (RF) signals with the first and second pluralities of array elements. The first and second substrate layers are separated by approximately a half wavelength (λ/2) corresponding to the one or more RF signals.

### [Disclosure]

### [Technical Problem]

An electronic device may include an antenna array to use the 5G mobile communication technology. Because an antenna array has an effective isotropically radiated power (EIRP) greater than a single antenna, the antenna array may transmit and/or receive various kinds of data more effectively.

However, in the case of the antenna array, the signal transmission and/or reception rate in a specific direction may be significantly low. For example, when a patch antenna array faces a back cover of the electronic device, the signal transmission and/or reception rate in the direction of a side surface of the electronic device may be significantly low. For another example, when a dipole antenna array faces the side surface of the electronic device, the signal transmission and/or reception rate in the direction of the back cover of the electronic device may be significantly low.

Embodiments disclosed in the specification are to provide an electronic device for improving the signal transmission and/or reception rates in various directions by adjusting a phase of an antenna array.

### [Technical Solution]

According to the present invention, an antenna module is provided as set forth in claim 1. Preferred embodiments are set forth in dependent claims.

### [ Advantageous Effects]

According to an embodiment disclosed in the specification, there is no separate antenna array for each direction, and thus the mounting space of an electronic device may be utilized efficiently.

Furthermore, according to the embodiments disclosed in this specification, a beam may be steered in various directions by adjusting the phase of an antenna array. Accordingly, the signal transmission/reception rate may be improved because the beam coverage is widened.

Besides, a variety of effects directly or indirectly understood through the specification may be provided.

### [ Description of Drawings]

FIG. 1 is an exploded perspective view of an electronic device according to an embodiment.
FIG. 2A illustrates a first antenna module according to an embodiment.
FIG. 2B is a cross-sectional view of a first antenna module according to an embodiment.
FIG. 3A illustrates a first antenna module according to an example not forming part of the claimed invention but nonetheless useful for the understanding of the invention.
FIG. 3B illustrates a first antenna module according to still another example not forming part of the claimed invention but nonetheless useful for the understanding of the invention.
FIG. 3C illustrates a first antenna module according to yet another embodiment.
FIG. 4 is a flowchart illustrating an operation of an electronic device according to an embodiment.
FIG. 5A illustrates a flow of a radiation current applied to a first dipole antenna and an 'a' dipole antenna according to an embodiment.
FIG. 5B illustrates a beam formed by a first antenna module according to an embodiment.
FIG. 6A illustrates that a beam is adjusted in an x-axis, according to an embodiment.
FIG. 6B illustrates an x-y cross-sectional view according to an embodiment.
FIG. 7A illustrates a flow of a radiation current applied to a first dipole antenna and an 'a' dipole antenna according to another embodiment.
FIG. 7B illustrates a beam formed by a first antenna module according to another embodiment.
FIG. 8A illustrates that a beam is adjusted in an x-axis, according to an embodiment.
FIG. 8B illustrates an x-z cross-sectional view according to an embodiment.
FIG. 9A illustrates a first antenna module according to an example not forming part of the claimed invention but nonetheless useful for the understanding of the invention.
FIG. 9B illustrates a beam formed by a first antenna module according to still another example not forming part of the claimed invention but nonetheless useful for the understanding of the invention.
FIG. 10 is a block diagram of an electronic device in a network environment, according to various embodiments.
FIG. 11 is a block diagram of an electronic device for supporting legacy network communication and 5G network communication, according to various embodiments.
FIG. 12 is a cross-sectional view of a third antenna module according to an example not forming part of the claimed invention but nonetheless useful for the understanding of the invention.

### [ Mode for Invention]

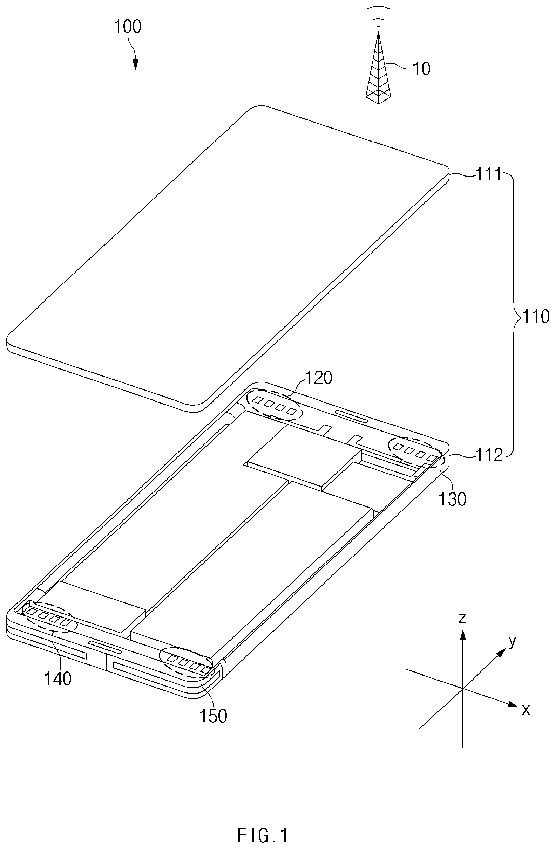

FIG. 1 is an exploded perspective view of an electronic device according to an embodiment.

Referring to FIG. 1, an electronic device 100 may include housing 110 and at least one of first to fourth antenna modules 120, 130, 140, and 150.

The housing 110 may protect various parts (e.g., a display or a battery) included in the electronic device 100 from external shocks, by forming the exterior of the electronic device 100. According to an embodiment, the housing 110 may include a back cover 111 (or a second plate) and a side member 112. The back cover 111 may be formed of tempered glass, plastic, and/or metal. The back cover 111 may be integrally implemented with the side member 112 or may be implemented to be removable by a user.

According to an embodiment, the first to fourth antenna modules 120, 130, 140, and 150 may be disposed inside the electronic device 100. The first to fourth antenna modules 120, 130, 140, and 150 may be opposed to the back cover 111. According to an embodiment, the first to fourth antenna modules 120, 130, 140, and 150 may be disposed in an area adjacent to each corner of the electronic device 100.

The antenna module (e.g., the first antenna module 120 illustrated in FIG. 1) according to an embodiment of the disclosure may change a direction, in which a signal is transmitted and/or received, depending on situations. For example, when it is determined that a nearest external device 10 (e.g., a base station) is positioned in the y direction of the electronic device 100 while the electronic device 100 transmits and/or receives a signal in the z direction, the electronic device 100 may change the phase of the current applied to an antenna module (e.g., the first antenna module 120 illustrated in FIG. 1). When the phase is changed, the antenna module (e.g., the first antenna module 120 illustrated in FIG. 1) may transmit and/or receive a signal in the y direction.

In this specification, the details described in FIG. 1 may be identically applied to configurations having the same reference numerals (or marks) as the electronic device 100 and the first to fourth antenna modules 120, 130, 140, and 150 illustrated in FIG. 1. Besides, the details about the first antenna module 120 may be applied to the second antenna module 130, the third antenna module 140, and the fourth antenna module 150.

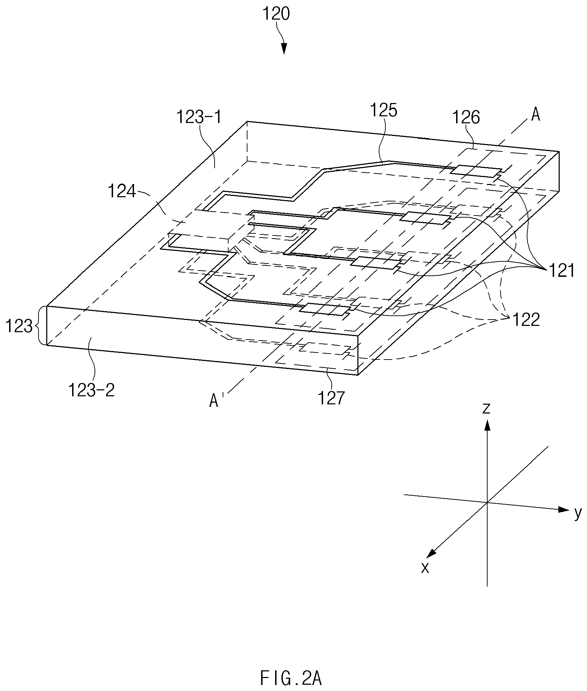

FIG. 2A illustrates a first antenna module according to an embodiment. FIG. 2A is a view associated with an antenna module including a feeding structure of a dipole antenna and a micro strip 125.

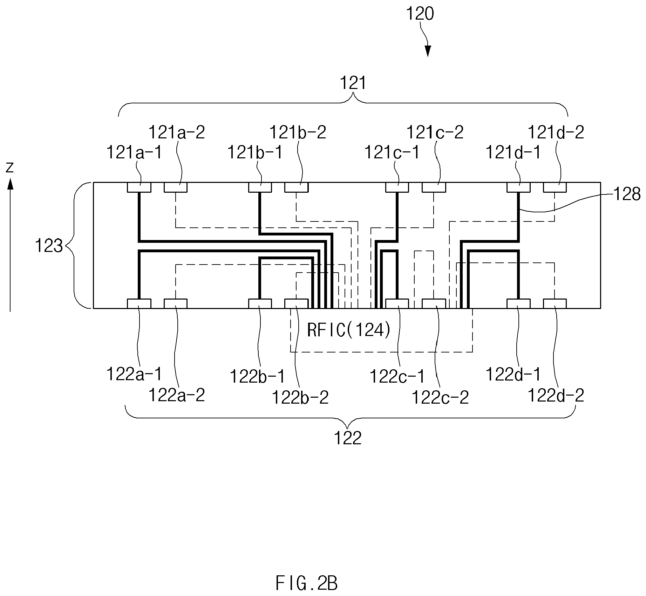

FIG. 2B is a cross-sectional view of a first antenna module according to an embodiment. FIG. 2B is a cross-sectional view of the first antenna module 120 illustrated in FIG. 2A taken along line A-A'. FIG. 2B is a diagram associated with an antenna module including the feeding structure of a dipole antenna and a probe 128. The feeding structure or feeding method illustrated in FIGS. 2A and 2B is only an embodiment, and various embodiments of the disclosure are not limited to illustration of FIGS. 2A and 2B.

Referring to FIGS. 2A and 2B, the first antenna module 120 includes a printed circuit board 123, a first antenna array 121, a second antenna array 122, and/or a radio frequency integrated circuit (RFIC) 124.

According to an embodiment, the printed circuit board 123 mounts the first antenna array 121, the second antenna array 122, and/or the RFIC 124.

According to an embodiment, the first antenna array 121 is disposed on one surface of the printed circuit board 123. For example, the first antenna array 121 includes a plurality of dipole antennas 121a-1, 121a-2, 121b-1, 121b-2, 121c-1, 121c-2, 121d-1, and 121d-2. The dipole antennas 121a-1, 121a-2, 121b-1, 121b-2, 121c-1, 121c-2, 121d-1, and 121d-2 may be aligned in the x direction on one surface 123-1 of the printed circuit board 123. The dipole antennas 121a-1, 121a-2, 121b-1, 121b-2, 121c-1, 121c-2, 121d-1, and 121d-2 may be electrically connected to the RFIC 124. In this specification, the "dipole antenna" may be referred to as an "antenna element".

According to an embodiment, the second antenna array 122 is disposed on the other surface 123-2 of the printed circuit board 123. For example, the second antenna array 122 includes a plurality of dipole antennas 122a-1, 122a-2, 122b-1, 122b-2, 122c-1, 122c-2, 122d-1, and 122d-2. The dipole antennas 122a-1, 122a-2, 122b-1, 122b-2, 122c-1, 122c-2, 122d-1, and 122d-2 may be aligned in the x direction on the other surface 123-2 of the printed circuit board 123. The dipole antennas 122a-1, 122a-2, 122b-1, 122b-2, 122c-1, 122c-2, 122d-1, and 122d-2 may be electrically connected to the RFIC 124. In this specification, the description given with regard to the first antenna array 121 may also be applied to the second antenna array 122.

According to an embodiment, the printed circuit board 123 may include a first region 126 and a second region 127. The first region 126 may refer to a region including the plurality of dipole antennas 121a-1, 121a-2, 121b-1, 121b-2, 121c-1, 121c-2, 121d-1, and 121d-2 formed on the one surface 123-1 of the printed circuit board 123. The second region 127 may refer to a region including the plurality of dipole antennas 122a-1, 122a-2, 122b-1, 122b-2, 122c-1, 122c-2, 122d-1, and 122d-2 formed on the other surface 123-2 of the printed circuit board 123. According to an embodiment, when viewed from above the printed circuit board 123, the first region 126 and the second region 127 may at least partially overlap with each other.

According to an embodiment, the RFIC 124 is attached to the printed circuit board 123. For example, the RFIC 124 may be attached in the -z direction of the printed circuit board 123. According to an embodiment, the RFIC 124 is electrically connected to the first antenna array 121 and e RFIC 124 transmits and/or receives a signal in a specified frequency band (e.g., 3 GHz to 100 GHz) by feeding the first antenna array 121 and/or the second antenna array 122.

According to an embodiment, the RFIC 124 may change the beam radiation direction of the first antenna module 120 by changing the phase of the current fed to the first antenna array 121 and the second antenna array 122. The RFIC 124 may transmit and/or receive a signal in the changed beam radiation direction. For example, when the external device 10 (e.g., a base station) is positioned in the y direction of the electronic device 100, the RFIC 124 may form a beam in the y direction by applying the current having substantially the same phase to the first antenna array 121 and the second antenna array 122 and then may transmit and/or receive a signal. For another example, when the external device 10 (e.g., a base station) is positioned in the z direction of the electronic device 100, the RFIC 124 may form a beam in the z direction by applying currents having different phases (e.g., 180°) from each other to the first antenna array 121 and the second antenna array 122 and then may transmit and/or receive a signal. The embodiments are exemplary, and the electronic device may transmit and/or receive a signal by forming a beam in a direction (e.g., between the y direction and the z direction or the x direction) other than the y and z directions.

According to an embodiment, the first dipole antennas 121a-1 and 121a-2 may be connected to electrodes having different polarities from each other. For example, the first radiator 121a-1 among the first dipole antennas 121a-1 and 121a-2 may be connected to a positive electrode, and the second radiator 121a-2 thereof may be connected to a negative electrode. In another embodiment, the first radiator 121a-1 among the first dipole antennas 121a-1 and 121a-2 may be connected to a positive electrode, and the second radiator 121a-2 among the first dipole antennas 121a-1 and 121a-2 may be connected to a ground layer. In this specification, the descriptions about the first dipole antennas 121a-1 and 121a-2 may also be applied to the second dipole antennas 121b-1 and 121b-2, the third dipole antennas 121c-1 and 121c-2, and the fourth dipole antennas 121d-1 and 121d-2.

According to an embodiment, the 'a' dipole antennas 122a-1 and 122a-2 may be connected to electrodes having different polarities from each other. For example, the 'a' radiator 122a-1 among the 'a' dipole antennas 122a-1 and 122a-2 may be connected to a positive electrode, and the 'b' radiator 122a-2 thereof may be connected to a negative electrode. For another example, the 'a' radiator 122a-1 among the 'a' dipole antennas 122a-1 and 122a-2 may be connected to a positive electrode, and the 'b' radiator 122a-2 among the 'a' dipole antennas 122a-1 and 122a-2 may be connected to a ground layer. In this specification, the description about the 'a' dipole antennas 122a-1 and 122a-2 may also be applied to the 'b' dipole antennas 122b-1 and 122b-2, the 'c' dipole antennas 122c-1 and 122c-2, and the 'd' dipole antennas 122d-1 and 122d-2.

In this specification, the description given with reference to FIGS. 2A, and 2B may be identically applied to configurations that have the same reference numerals (or marks) as the first antenna module 120 illustrated in FIGS. 2A, and 2B. Also, the structure of the first antenna module 120 illustrated in FIGS. 2A and 2B is exemplary, and embodiments of the disclosure are not limited to the structure of the first antenna module 120 illustrated in FIGS. 2A and 2B. In examples not forming part of the claimed invention but nonetheless useful for the understanding of the invention, a monopole antenna or a slot antenna other than a dipole antenna may be mounted on the first antenna module 120.

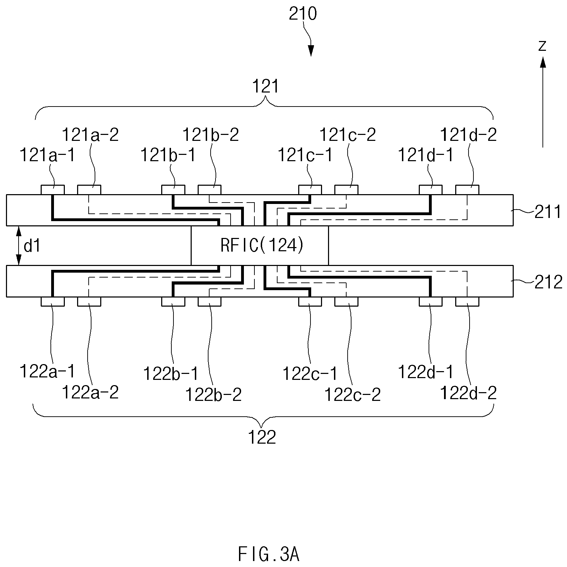

FIG. 3A illustrates a first antenna module according to another example not forming part of the claimed invention but nonetheless useful for the understanding of the invention.

FIGS. 3A to 3C to be described later are diagrams associated with various types of the first antenna modules capable of being included in the electronic device 100.

Referring to FIG. 3A, a first antenna module 210 may include the first antenna array 121, the second antenna array 122, the RFIC 124, a first printed circuit board 211, and/or a second printed circuit board 212. The first antenna array 121 and the second antenna array 122 may be disposed on the first printed circuit board 211 and the second printed circuit board 212, respectively. The RFIC 124 may be interposed between the first printed circuit board 211 and the second printed circuit board 212.

According to an example, the RFIC 124 may change the direction of the transmitted and/or received signal by changing the phase of the current fed to the first antenna array 121 and the second antenna array 122. For example, the RFIC 124 may form a beam in the direction of a base station by changing the phase of the current fed to the first antenna array 121 and the second antenna array 122 and then may transmit and/or receive a signal.

According to an example, the signal transmission and/or reception rate of the first antenna module 210 may be changed depending on a distance d1 between the first printed circuit board 211 and the second printed circuit board 212. For example, when the distance d1 between the first printed circuit board 211 and the second printed circuit board 212 is not less than a specified value, the signal transmission and/or reception rate of the first antenna module 210 may not be less than a predetermined level.

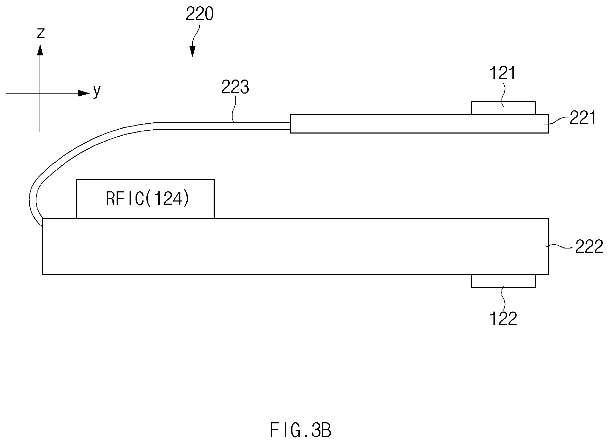

FIG. 3B illustrates a first antenna module according to still another example not forming part of the claimed invention but nonetheless useful for the understanding of the invention.

Referring to FIG. 3B, a first antenna module 220 may include the first antenna array 121, the second antenna array 122, the RFIC 124, a sub PCB 221, and/or a main PCB 222. The first antenna array 121 and the second antenna array 122 may be disposed on the sub PCB 221 and the main PCB 222, respectively. The RFIC 124 may be disposed on the main PCB 222.

According to an example, the sub PCB 221 may be disposed in the z direction of the main PCB 222. According to an embodiment, the sub PCB 221 may be smaller than the main PCB 222, and may be electrically connected to the RFIC 124 disposed on the main PCB 222 through wires. For example, the sub PCB 221 may be a flexible printed circuit board (FPCB).

The RFIC 124 may change the direction of a beam by changing the phase of the current fed to the first antenna array 121 and the second antenna array 122. For example, the RFIC 124 may form a beam in the direction of the external device 10 (e.g., a base station) by changing the phase of the current fed to the first antenna array 121 and the second antenna array 122 and then may transmit and/or receive a signal.

According to an example, the sub PCB 221 and the main PCB 222 may be connected through a connection member 223. The connection member 223 may be a coaxial cable or a flexible-printed circuit board (F-PCB). According to an embodiment, the first antenna array 121 on the sub PCB 221 may be electrically connected to the RFIC 124 on the main PCB 222 through the connection member 223.

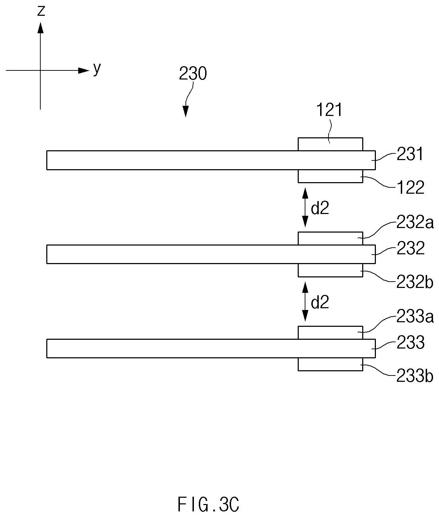

FIG. 3C illustrates a first antenna module according to yet another embodiment.

Referring to FIG. 3C, a first antenna module 230 may include a first printed circuit board 231, a second printed circuit board 232, a third printed circuit board 233, the first antenna array 121, the second antenna array 122, a third antenna array 232a, a fourth antenna array 232b, a fifth antenna array 233a, and a sixth antenna array 233b.

According to an embodiment, the first printed circuit board 231, the second printed circuit board 232, and the third printed circuit board 233 may be spaced from one another by a specified distance. For example, the first printed circuit board 231 and the second printed circuit board 232 may be spaced from each other by the specified distance, and the second printed circuit board 232 and the third printed circuit board 233 may also be spaced from each other by the specified distance.

The antenna arrays 121 and 122 may be disposed on the printed circuit board 231; the antenna arrays 232a and 232b may be disposed on the printed circuit board 232; the antenna arrays 233a and 233b may be disposed on the printed circuit board 233. For example, the first antenna array 121 is disposed on one surface of the first printed circuit board 231; the second antenna array 122 may be disposed on the other surface of the first printed circuit board 231. The third antenna array 232a may be disposed on one surface of the second printed circuit board 232; the fourth antenna array 232b may be disposed on the other surface of the second printed circuit board 232. The fifth antenna array 233a may be disposed on one surface of the third printed circuit board 233; the sixth antenna array 233b may be disposed on the other surface of the third printed circuit board 233.

According to an embodiment, the electronic device 100 may change the beam radiation direction of the first antenna module 120 by changing the phase of the current fed to the first to sixth antenna arrays 121, 122, 232a, 232b, 233a, and 233b. The RFIC 124 may transmit and/or receive a signal in the changed beam radiation direction. For example, the electronic device 100 may form a beam in the direction of the external device 10 (e.g., a base station) by changing the phase of the current fed to the first to sixth antenna arrays 121, 122, 232a, 232b, 233a, and 233b and then may transmit and/or receive a signal.

According to an embodiment, the signal transmission and/or reception rate of the first antenna module 230 may be changed depending on a distance d2 between antenna arrays. For example, when the distance d2 between the second antenna array 122 and the third antenna array 232a is not less than a specified value, the signal transmission and/or reception rate of the first antenna module 230 may not be less than a predetermined level.

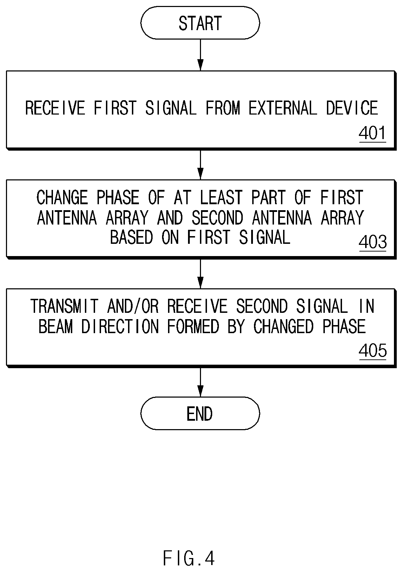

FIG. 4 is a flowchart illustrating an operation of an electronic device according to an embodiment. FIG. 4 is a flowchart illustrating an operation of the electronic device 100 illustrated in FIG. 1.

Referring to FIG. 4, in operation 401, the electronic device 100 may receive a first signal from the external device 10 (e.g., a base station). The electronic device 100 may set an optimal direction among directions capable of transmitting and/or receiving a signal based on the first signal. For example, when the external device 10 (e.g., a base station) is positioned in the y direction of the electronic device 100, the electronic device 100 may set the y direction as the optimal direction capable of transmitting and/or receiving a signal.

The above-described direction setting method is exemplary, and embodiments of the disclosure are not limited to the above-described setting method. For example, the electronic device 100 may set the optimal direction capable of transmitting and/or receiving a signal regardless of the location of the external device 10 (e.g., a base station).

In operation 403, the electronic device 100 may change the phase of at least part of the first antenna array 121 and the second antenna array 122. For example, when the y direction is set as the optimal direction, the electronic device 100 may apply the current having substantially the same phase to the first antenna array 121 and the second antenna array 122. For another example, when the z direction is set as the optimal direction, the electronic device 100 may apply currents having different phases (e.g., 180°) to the first antenna array 121 and the second antenna array 122, respectively.

In operation 405, the electronic device 100 may transmit and/or receive a second signal in a beam direction formed by the changed phase. For example, when the current having substantially the same phase is applied to the first antenna array 121 and the second antenna array 122, a beam may be formed in the y direction. In this case, the electronic device 100 may transmit and/or receive a signal in a specified frequency band (e.g., 3 GHz to 100 GHz) in the y direction.

For another example, when the currents having different phases (e.g., 180°) are applied to the first antenna array 121 and the second antenna array 122, a beam may be formed in the z direction. In this case, the electronic device 100 may transmit and/or receive a signal in a specified frequency band (e.g., 3 GHz to 100 GHz) in the z direction.

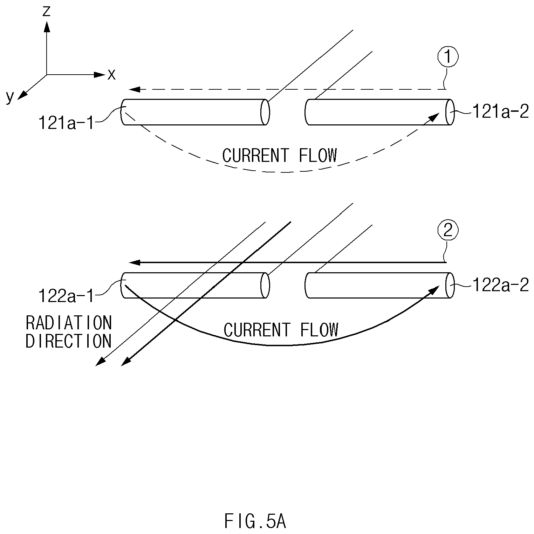

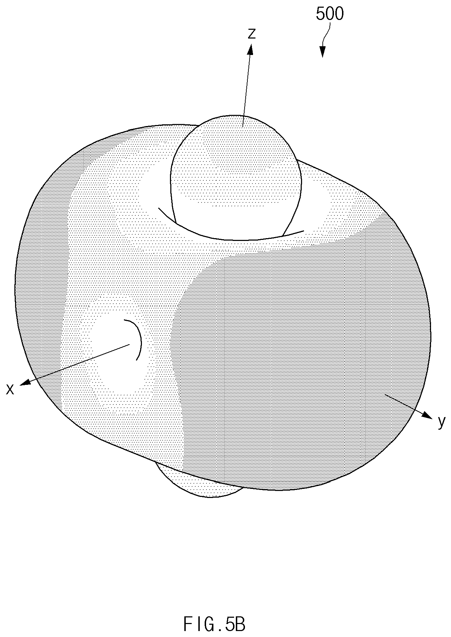

FIG. 5A illustrates a flow of a radiation current applied to a first dipole antenna and an 'a' dipole antenna according to an embodiment. FIG. 5B illustrates a beam formed by a first antenna module according to an embodiment. FIG. 5A illustrates the first dipole antennas 121a-1 and 121a-2 and the 'a' dipole antennas 122a-1 and 122a-2 illustrated in FIG. 2B. Hereinafter, for convenience of description, the disclosure will be described by using the first dipole antennas 121a-1 and 121a-2 and the 'a' dipole antennas 122a-1 and 122a-2 illustrated in FIG. 2B. FIG. 5B illustrates a beam of the first antenna module 120 formed by the feeding method illustrated in FIG. 5A.

Referring to FIGS. 2B and 5A, the RFIC 124 may apply a current having substantially the same phase to the first antenna array 121 and the second antenna array 122. For example, FIG. 5A may be associated with an embodiment in which the phase difference between the first antenna array 121 and the second antenna array 122 is 0° or an embodiment in which a current having the same phase is applied to the first antenna array 121 and the second antenna array 122. The phase difference of the current applied to the first dipole antennas 121a-1 and 121a-2 and the 'a' dipole antennas 122a-1 and 122a-2 may be 0°; the phase difference of the current applied to the second dipole antennas 121b-1 and 121b-2 and the 'b' dipole antennas 122b-1 and 122b- 2 may be 0°; the phase difference of the current applied to the third dipole antennas 121c-1 and 121c-2 and the 'c' dipole antennas 122c-1 and 122c-2 may be 0°; the phase difference of the current applied to the fourth dipole antennas 121d-1 and 121d-2 and the 'd' dipole antennas 122d-1 and 122d-2 may be 0°.

In the case of the first dipole antennas 121a-1 and 121a-2 and the 'a' dipole antennas 122a-1 and 122a-2, the RFIC 124 may apply a current having the phase of 0° to the first dipole antennas 121a-1 and 121a-2 and the 'a' dipole antennas 122a-1 and 122a-2. Accordingly, a current may flow into the first dipole antennas 121a-1 and 121a-2 in the first direction ①; a current may flow to the 'a' dipole antennas 122a-1 and 122a-2 in the second direction ②.

**In** this specification, the description about the first dipole antennas 121a-1 and 121a-2 may also be applied to the second dipole antennas 121b-1 and 121b-2, the third dipole antennas 121c-1 and 121c-2, and the fourth dipole antennas 121d-1 and 121d-2. In this specification, the description about the 'a' dipole antennas 122a-1 and 122a-2 may also be applied to the 'b' dipole antennas 122b-1 and 122b-2, the 'c' dipole antennas 122c-1 and 122c-2, and the 'd' dipole antennas 122d-1 and 122d-2. In addition, the first direction ① and the second direction ② may be substantially the same direction. The RFIC 124 may feed the first antenna array 121 and the second antenna array 122 in the same phase such that the radiation current flows in substantially the same direction.

Referring to FIG. 5B, a beam 500 having a convex shape in the y direction may be formed by the current flowing in the first direction ① and the second direction ②. For example, the beam having a convex shape in the y direction may be formed by the current flowing in the first direction ①; the beam having a convex shape in the y direction may be formed by the current flowing in the second direction ②. In the case of the embodiment shown in FIG. 5A, because a current flows into the first dipole antennas 121a-1 and 121a-2 and the 'a' dipole antennas 122a-1 and 122a-2 in the same direction, the beam having a more convex shape may be formed in the y direction than the beam in the case where a current flows into one of the first dipole antennas 121a-1 and 121a-2 and the 'a' dipole antennas 122a-1 and 122a-2. According to an embodiment, the beam 500 having a more convex shape in the y **direction** may be formed by the current flowing in the first direction ① and the second direction ②. For example, a ground layer (not illustrated) of the printed circuit board 123 may be positioned in the -y direction. Accordingly, the beam 500 having a more convex shape in the y direction may be formed. The ground layer of the printed circuit board 123 may mean some regions of the printed circuit board 123 for forming a transmission line 125.

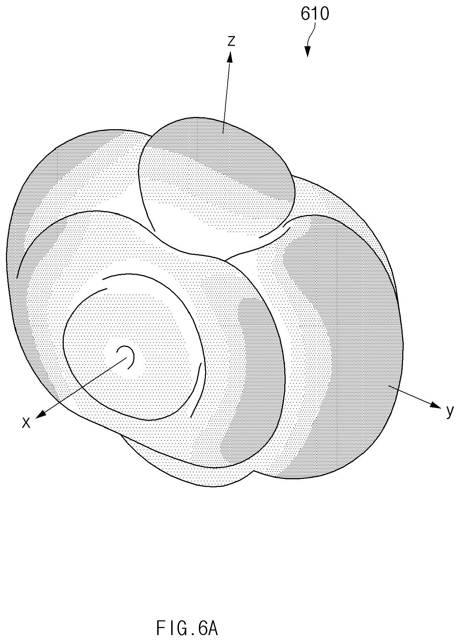

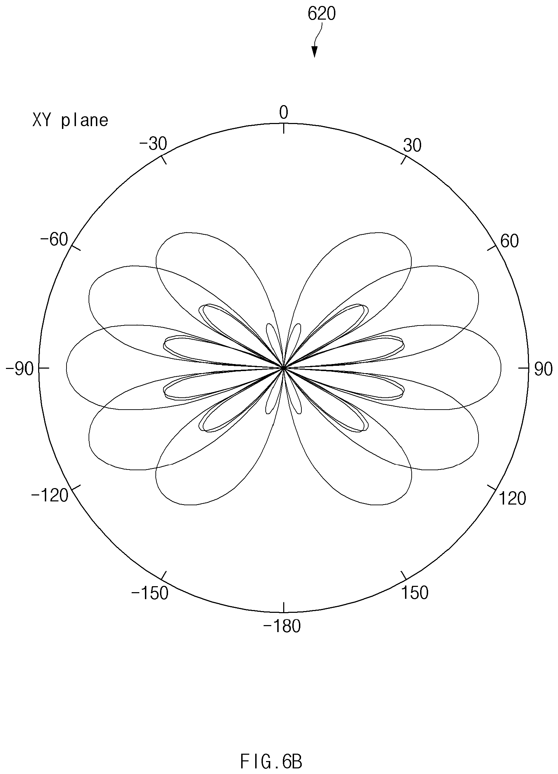

FIG. 6A illustrates that a beam is adjusted in an x-axis, according to an embodiment. FIG. 6B illustrates an x-y cross-sectional view according to an embodiment. FIG. 6B illustrates an x-y cross-sectional view of a beam 610 illustrated in FIG. 6A. According to an embodiment, the beam 500 illustrated in FIG. 5B may be a beam in the case where a current is applied to the first dipole antennas 121a-1 and 121a-2 and the 'a' dipole antennas 122a-1 and 122a-2; the beam 610 to be described later with reference to FIG. 6A may be a beam in the case where a current is applied to the first antenna array 121 and the second antenna array 122.

Referring to FIGS. 6A and 6B, a current having substantially the same phase may be applied to the first antenna array 121 and the second antenna array 122. For example, the current having the phase described in Table 1 below may be applied to the first dipole antennas 121a-1 and 121a-2, the second dipole antennas 121b-1 and 121b-2, the third dipole antennas 121c-1 and 121c-2, the fourth dipole antennas 121d-1 and 121d-2, the 'a' dipole antennas 122a-1 and 122a-2, the 'b' dipole antennas 122b-1 and 122b-2, the 'c' dipole antennas 122c-1 and 122c-2, and the 'd' dipole antennas 122d-1 and 122d-2. The beam 610 may be formed by the current having the phase described in Table 1 below.

**[Table 1]**

| | | | | |
|---|---|---|---|---|
| | First dipole antennas 121a-1 and 121a-2 | Second dipole antennas 121b-1 and 121b-2 | Third dipole antennas 121c-1 and 121c-2 | Fourth dipole antennas 121d-1 and 121d-2 |
| Phase | 0° | 90° | 180° | 270° |
| | 'a' dipole antennas 122a-1 and 122a-2 | 'b' dipole antennas 122b-1 and 122b-2 | 'c' dipole antennas 122c-1 and 122c-2 | 'd' dipole antennas 122d-1 and 122d-2 |
| Phase | 0° | 90° | 180° | 270° |

In the case of the embodiment shown in FIGS. 6A and 6B, because there is a phase difference between the first dipole antennas 121a-1 and 121a-2 and the second dipole antennas 121b-1 and 121b-2, between the second dipole antennas 121b-1 and 121b-2 and the third dipole antennas 121c-1 and 121c-2, or between the third dipole antennas 121c-1 and 121c-2 and the fourth dipole antennas 121d-1 and 121d-2 (or between the 'a' dipole antennas 122a-1 and 122a-2 and the 'b' dipole antennas 122b-1 and 122b-2, between the 'b' dipole antennas 122b-1 and 122b-2 and the 'c' dipole antennas 122c-1 and 122c-2, or between the 'c' dipole antennas 122c-1 and 122c-2 and the 'd' dipole antennas 122d-1 and 122d-2), the rate of signal transmission and/or reception in the x-axis direction and/or the -x-axis direction may be slightly higher than the rate of signal transmission and/or reception in the case where there is no phase difference. On the other hand, the rate of signal transmission and/or reception in the y-axis direction and/or the -y-axis direction may be slightly lower than the rate of signal transmission and/or reception in the case where there is no phase difference.

According to an embodiment, the beam 610 illustrated in FIG. 6A may be the beam measured without considering a ground layer (not illustrated) of the printed circuit board 123. For example, the ground layer (not illustrated) of the printed circuit board 123 may be positioned in the -y direction, but the beam 610 may be measured without considering the fact that the ground layer of the printed circuit board 123 is positioned in the -y direction.

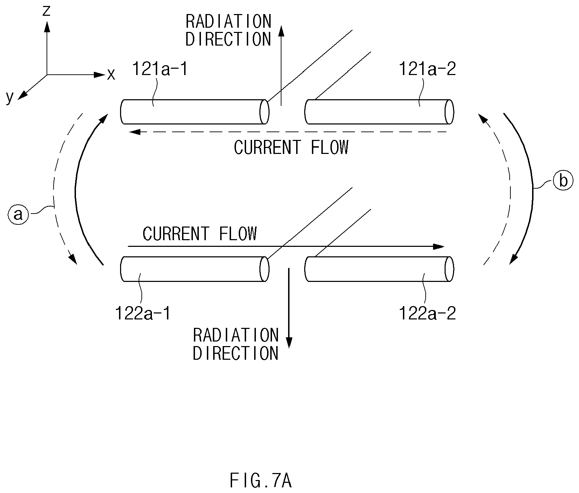

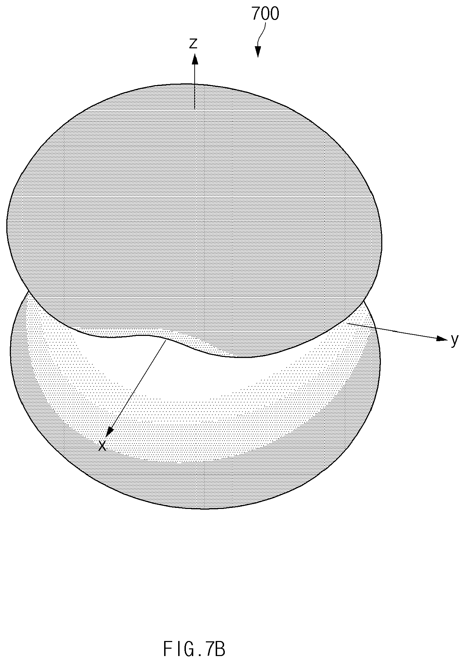

FIG. 7A illustrates a flow of a radiation current applied to a first dipole antenna and an 'a' dipole antenna according to another embodiment. FIG. 7B illustrates a beam formed by a first antenna module according to another embodiment. FIG. 7A illustrates the first dipole antennas 121a-1 and 121a-2 and the 'a' dipole antennas 122a-1 and 122a-2 illustrated in FIG. 2B. Hereinafter, for convenience of description, the disclosure will be described by using the first dipole antennas 121a-1 and 121a-2 and the 'a' dipole antennas 122a-1 and 122a-2 illustrated in FIG. 2B. FIG. 7B illustrates a beam of the first antenna module formed by the feeding method illustrated in FIG. 7A.

Referring to FIG. 7A, the RFIC 124 may apply the current to the first antenna array 121 and the second antenna array 122 such that currents applied to the first antenna array 121 and the second antenna array 122 have an opposite phase. For example, FIG. 7A may be associated with an embodiment in which the phase difference between the first antenna array 121 and the **second** antenna array 122 is 180° or an embodiment in which currents having opposite phases are applied to the first antenna array 121 and the second antenna array 122. The phase difference of the current applied to the first dipole antennas 121a-1 and 121a-2 and the 'a' dipole antennas 122a-1 and 122a-2 may be 180°; the phase difference of the current applied to the second dipole antennas 121b-1 and 121b-2 and the 'b' dipole antennas 122b-1 and 122b-2 may be 180°; the phase difference of the current applied to the third dipole antennas 121c-1 and 121c-2 and the 'c' dipole antennas 122c-1 and 122c-2 may be 180°; the phase difference of the current applied to the fourth dipole antennas 121d-1 and 121d-2 and the 'd' dipole antennas 122d-1 and 122d-2 may be 180°.

In the case of the first dipole antennas 121a-1 and 121a-2 and the 'a' dipole antennas 122a-1 and 122a-2, the RFIC 124 may apply a current having the phase of 180° to the first dipole antennas 121a-1 and 121a-2 and the 'a' dipole antennas 122a-1 and 122a-2. Accordingly, currents may flow to the first dipole antennas 121a-1 and 121a-2 and the 'a' dipole antennas 122a-1 and 122a-2 in the 'a' direction ⓐ and the 'b' direction ⓑ, respectively.

In this specification, the descriptions about the first dipole antennas 121a-1 and 121a-2 may also be applied to the second dipole antennas 121b-1 and 121b-2, the third dipole antennas 121c-1 and 121c-2, and the fourth dipole antennas 121d-1 and 121d-2. In this specification, the description about the 'a' dipole antennas 122a-1 and 122a-2 may also be applied to the 'b' dipole antennas 122b-1 and 122b-2, the 'c' dipole antennas 122c-1 and 122c-2, and **the 'd'** dipole antennas 122d-1 and 122d-2. For another example, the 'a' direction ⓐ and the 'b' direction ⓑ may be opposite directions to each other.

Referring to FIG. 7B, a beam having a convex shape in the +z/-z direction may be formed by the current flowing in the 'a' direction ⓐ; a beam having a convex shape in the +z/-z direction may be formed by the current flowing in the 'b' direction ⓑ. The currents flow into the first dipole antennas 121a-1 and 121a-2, which are one configuration of the first antenna array 121, and the 'a' dipole antennas 122a-1 and 122a-2, which are one configuration of the second antenna array 122, in both the 'a' direction ⓐ and the 'b' direction ⓑ. Accordingly, a beam 700 having the shape illustrated in FIG. 7B may be formed. For example, when the RFIC 124 applies currents having opposite phases to the first dipole antennas 121a-1 and 121a-2 and the 'a' dipole antennas 122a-1 and 122a-2, the RFIC 124 may transmit and/or receive signals in the z direction and -z direction.

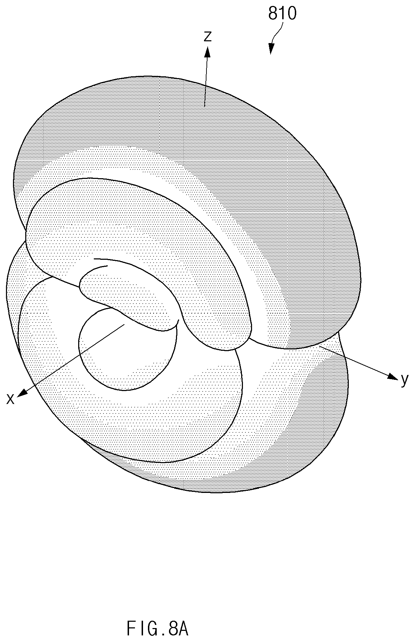

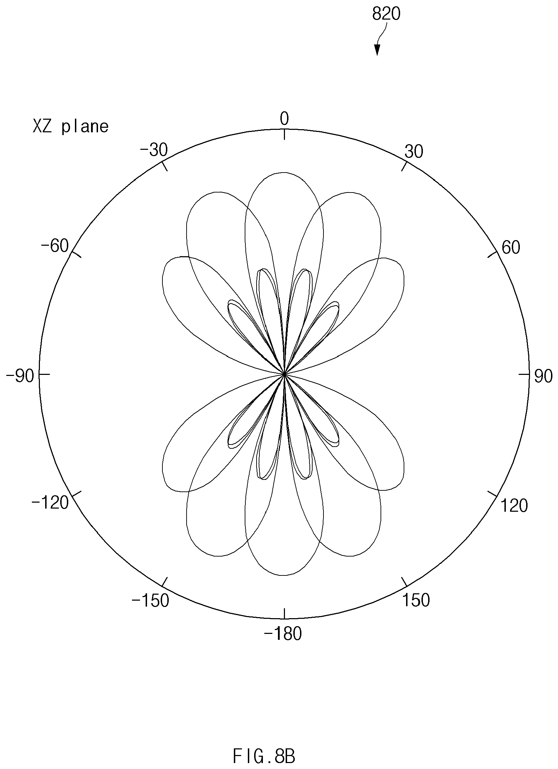

FIG. 8A illustrates that a beam is adjusted in an x-axis, according to an embodiment. FIG. 8B illustrates an x-z cross-sectional view according to an embodiment. FIG. 8B illustrates an x-z cross-sectional view of the beam illustrated in FIG. 8A. According to an embodiment, the beam 700 illustrated in FIG. 7B may be a beam in the case where a current is applied to the first dipole antennas 121a-1 and 121a-2 and the 'a' dipole antennas 122a-1 and 122a-2; a beam 820 to be described later with reference to FIG. 8A may be a beam in the case where a current is applied to the first antenna array 121 and the second antenna array 122.

Referring to FIGS. 8A and 8B, the current may be applied to the first antenna array 121 and the second antenna array 122 such that the current applied to the first antenna array 121 and the second antenna array 122 have opposite phases. For example, the current having the phase described in Table 2 below may be applied to the first dipole antennas 121a-1 and 121a-2, the second dipole antennas 121b-1 and 121b-2, the third dipole antennas 121c-1 and 121c-2, the fourth dipole antennas 121d-1 and 121d-2, the 'a' dipole antennas 122a-1 and 122a-2, the 'b' dipole antennas 122b-1 and 122b-2, the 'c' dipole antennas 122c-1 and 122c-2, and the 'd' dipole antennas 122d-1 and 122d-2. The beam 810 may be formed by the current having the phase described in Table 2 below.

**[Table 2]**

| | | | | |
|---|---|---|---|---|
| | First dipole antennas 121a-1 and 121a-2 | Second dipole antennas 121b-1 and 121b-2 | Third dipole antennas 121c-1 and 121c-2 | Fourth dipole antennas 121d-1 and 121d-2 |
| Phase | 0° | 90° | 180° | 270° |
| | 'a' dipole antennas 122a-1 and 122a-2 | 'b' dipole antennas 122b-1 and 122b-2 | 'c' dipole antennas 122c-1 and 122c-2 | 'd' dipole antennas 122d-1 and 122d-2 |
| Phase | 180° | 270° | 0° | 90° |

In the case of the embodiment shown in FIGS. 8A and 8B, because there is a phase difference between the first dipole antennas 121a-1 and 121a-2 and the second dipole antennas 121b-1 and 121b-2, between the second dipole antennas 121b-1 and 121b-2 and the third dipole antennas 121c-1 and 121c-2, or between the third dipole antennas 121c-1 and 121c-2 and the fourth dipole antennas 121d-1 and 121d-2 (or between the 'a' dipole antennas 122a-1 and 122a-2 and the 'b' dipole antennas 122b-1 and 122b-2, between the 'b' dipole antennas 122b-1 and 122b-2 and the 'c' dipole antennas 122c-1 and 122c-2, or between the 'c' dipole antennas 122c-1 and 122c-2 and the 'd' dipole antennas 122d-1 and 122d-2), the rate of signal transmission and/or reception in the x-axis direction and/or the -x-axis direction may be slightly higher than the rate of signal transmission and/or reception in the case where there is no phase difference. On the other hand, the rate of signal transmission and/or reception in the z-axis direction and/or the -z-axis direction may be slightly lower than the rate of signal transmission and/or reception in the case where there is no phase difference.

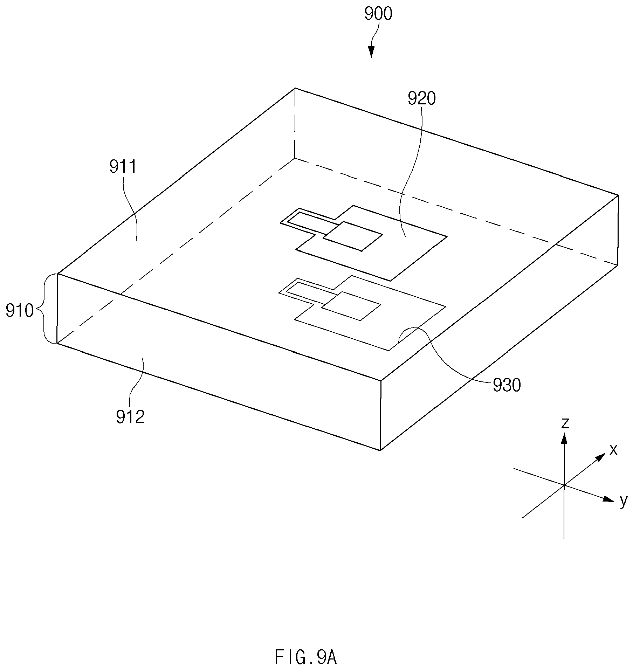

FIG. 9A illustrates a first antenna module according to still another example not forming part of the claimed invention but nonetheless useful for the understanding of the invention.

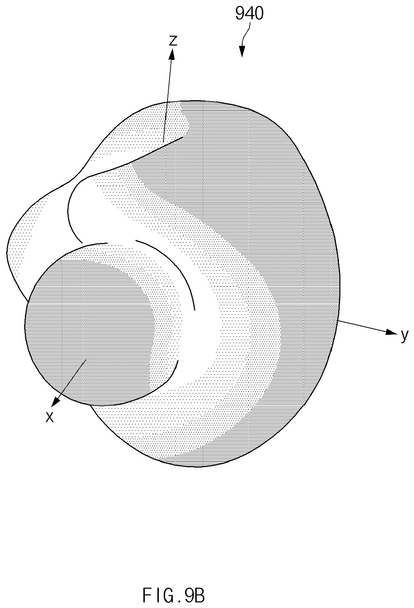

FIG. 9B illustrates a beam formed by a first antenna module according to still another embodiment.

Referring to FIG. 9A, a first antenna module 900 may include a printed circuit board 910, a first slot antenna 920, and/or a second slot antenna 930. The first slot antenna 920 may be disposed on one surface 911 of the printed circuit board 910. The second slot antenna 930 may be disposed on the other surface 912 of the printed circuit board 910. Accordingly, the first slot antenna 920 and the second slot antenna 930 may be opposite to each other through the printed circuit board 910.

Although not illustrated in FIG. 9A, the first antenna module 900 may include the RFIC 124. The RFIC 124 may feed the first slot antenna 920 and the second slot antenna 930. When the RFIC 124 feeds the first slot antenna 920 and the second slot antenna 930, a beam 940 illustrated in FIG. 9B may be formed.

According to an embodiment, when the current of substantially the same phase is applied to the first slot antenna 920 and the second slot antenna 930, the beam 940 in the y-axis direction may be formed. As illustrated in FIG. 9B, even when another type of an antenna (e.g., a slot antenna or a monopole antenna) other than a dipole antenna is disposed in the first antenna module 900, the beam 940 in the y-axis direction may be formed. Besides, as illustrated in FIG. 9B, the signal transmission and/or reception rate for the x, y, and z directions of the first antenna module 900 may be slightly high. However, the signal transmission and/or reception rate for the -y direction may be slightly low.

According to an embodiment, the RFIC 124 may change the direction of the transmitted and/or received signal by changing the phase of the current fed to the first slot antenna 920 and the second slot antenna 930. For example, the RFIC 124 may form a beam in the direction of the external device 10 (e.g., a base station) by changing the phase of the current fed to the first slot antenna 920 and the second slot antenna 930 and then may transmit and/or receive a signal.

According to an embodiment of the disclosure, the electronic device 100 may include housing **110** and the antenna module 120 disposed on one surface of the housing 110. The antenna module 120 may include the printed circuit board 123, the first antenna array 121 disposed one surface of the printed circuit board 123, the second antenna array 122 disposed on the other surface of the printed circuit board 123 and at least partially overlapping with the first antenna array 121 when viewed from one surface of the housing **110** and the radio frequency integrated circuit (RFIC) 124 electrically connected to the first antenna array 121 and the second antenna array 122 and for feeding the first antenna array 121 and the second antenna array 122. The RFIC 124 may be configured to receive a first signal from the external device 10 through at least one of the first antenna array 121 and the second antenna array 122, to change a phase of at least part of the first antenna array 121 and the second antenna array 122 based on the first signal, and to transmit and/or receive a second signal in a direction of a beam formed by the changed phase.

According to an embodiment of the disclosure, the RFIC 124 may feed the first antenna array 121 and the second antenna array 122 such that a phase difference between the first antenna array 121 and the second antenna array 122 has a specified value.

According to an embodiment of the disclosure, the RFIC 124 may change a phase of at least part of the first antenna array 121 and the second antenna array 122 such that the beam is formed in a direction of the external device 10.

According to an embodiment of the disclosure, the first antenna array 121 may be spaced from the second antenna array 122 by a specified distance.

According to an embodiment of the disclosure, the antenna module 120 may be disposed in a region adjacent to a first edge of the housing 110. The electronic device 100 may further include an additional antenna module 120 disposed in a region adjacent to a second edge opposite to the first edge.

According to an embodiment of the disclosure, the antenna module 120 may further include the feeding line 125 for connecting the RFIC 124 to the first antenna array 121 and the second antenna array 122.

According to an embodiment of the disclosure, the first antenna array 121 may include a plurality of dipole antennas 121a-1, 121a-2, 121b-1, 121b-2, 121c-1, 121c-2, 121d-1, and 121d-2. The second antenna array 122 may include a plurality of dipole antennas 122a-1, 122a-2, 122b-1, 122b-2, 122c-1, 122c-2, 122d-1, and 122d-2.

According to an embodiment of the disclosure, the RFIC 124 may feed each of the plurality of dipole antennas 121a-1, 121a-2, 121b-1, 121b-2, 121c-**1,** 121c-2, 121d-1, and 121d-2, 122a-1, 122a-2, 122b-1, 122b-2, 122c-1, 122c-2, 122d-1, and 122d-2 such that a phase difference between the plurality of dipole antennas 121a-1, 121a-2, 121b-1, 121b-2, 121c-1, 121c-2, 121d-1, and 121d-2, 122a-1, 122a-2, 122b-1, 122b-2, 122c-1, 122c-2, 122d-1, and 122d-2 occurs.

According to an embodiment of the disclosure, the plurality of dipole antennas 121a-1, 121a-2, 121b-1, 121b-2, 121c-1, 121c-2, 121d-1, and 121d-2, 122a-1, 122a-2, 122b-1, 122b-2, 122c-1, 122c-2, 122d-1, and 122d-2 may be spaced from one another by a specified distance.

According to an example not forming part of the claimed invention but nonetheless useful for the understanding of the invention, the first antenna array 121 and the second antenna array 122 may include at least one of a dipole antenna, a monopole antenna, and a slot antenna.

According to an embodiment of the disclosure, the antenna module 120 may include the printed circuit board 123, the first antenna array 121 disposed one surface of the printed circuit board 123, the second antenna array 122 disposed on the other surface of the printed circuit board 123 and at least partially overlapping with the first antenna array 121 when viewed from above the printed circuit board 123, and the RFIC 124 electrically connected to the first antenna array 121 and the second antenna array 122 and for feeding the first antenna array 121 and the second antenna array 122. The RFIC 124 may be configured to receive a first signal from the external device 10 through at least one of the first antenna array 121 and the second antenna array 122, to change a phase of at least part of the first antenna array 121 and the second antenna array 122 based on the first signal, and to transmit and/or receive a second signal in a direction of a beam formed by the changed phase.

According to an embodiment of the disclosure, the RFIC 124 may feed the first antenna array 121 and the second antenna array 122 such that a phase difference between the first antenna array 121 and the second antenna array 122 has a specified value.

According to an embodiment of the disclosure, the RFIC 124 may change a phase of at least part of the first antenna array 121 and the second antenna array 122 such that the beam is formed in a direction of the external device 10.

According to an embodiment of the disclosure, the first antenna array 121 may be spaced from the second antenna array 122 by a specified distance.

According to an embodiment of the disclosure, the antenna module 120 may further include the feeding line 125 for connecting the RFIC 124 to the first antenna array 121 and the second antenna array 122.

According to an embodiment of the disclosure, the first antenna array 121 may include a plurality of dipole antennas 121a-1, 121a-2, 121b-1, 121b-2, 121c-1, 121c-2, 121d-1, and 121d-2. The second antenna array 122 may include a plurality of dipole antennas 122a-1, 122a-2, 122b-1, 122b-2, 122c-1, 122c-2, 122d-1, and 122d-2.

According to an embodiment of the disclosure, the RFIC 124 may feed each of the plurality of dipole antennas 121a-1, 121a-2, 121b-1, 121b-2, 121c-**1,** 121c-2, 121d-1, and 121d-2, 122a-1, 122a-2, 122b-1, 122b-2, 122c-1, 122c-2, 122d-1, and 122d-2 such that a phase difference between the plurality of dipole antennas 121a-1, 121a-2, 121b-1, 121b-2, 121c-1, 121c-2, 121d-1, and 121d-2, 122a-1, 122a-2, 122b-1, 122b-2, 122c-1, 122c-2, 122d-1, and 122d-2 occurs.

According to an embodiment of the disclosure, the plurality of dipole antennas 121a-1, 121a-2, 121b-1, 121b-2, 121c-1, 121c-2, 121d-1, and 121d-2, 122a-1, 122a-2, 122b-1, 122b-2, 122c-1, 122c-2, 122d-1, and 122d-2 may be spaced from one another by a specified distance.

According to an example not forming part of the claimed invention but nonetheless useful for the understanding of the invention, the first antenna array 121 and the second antenna array 122 may include at least one of a dipole antenna, a monopole antenna, and a slot antenna.

According to an embodiment disclosed in this specification, an electronic device 100 may include housing 110 including a first plate, a second plate 111 facing away from the first plate, and the side member 112 surrounding a space between the first plate and the second plate 111 and coupled with the second plate 111 or integrally formed with the second plate 111, a display viewable through at least part of the first plate, an antenna structure 120 disposed inside the housing 110, and at least one RFIC 124 electrically connected to the first antenna array 121 and the second antenna array 122 and for transmitting and/or receiving a signal having a frequency between 3 GHz and 100 GHz. The antenna structure 120 may include the printed circuit board 123 including a first surface facing in a first direction and a second surface facing in the second direction opposite to the first direction, the first region 126 including a first antenna array 121 including a plurality of first antenna elements 121a-1, 121a-2, 121b-1, 121b-2, 121c-1, 121c-2, 121d-1, and 121d-2 formed inside the printed circuit board 123 or on the first surface, the second region 127 including the second antenna array 122 including a plurality of second antenna elements 122a-1, 122a-2, 122b-1, 122b-2, 122c-1, 122c-2, 122d-1, and 122d-2, which are closer to the second surface than the plurality of first antenna elements 121a-1, 121a-2, 121b-1, 121b-2, 121c-1, 121c-2, 121d-1, and 121d-2 inside the printed circuit board or which are formed on the second surface, and at least partially overlapping with the first region 126 when viewed from above the first surface, and at least one ground layer disposed in the printed circuit board and electrically connected to the first antenna array 121 and the second antenna array 122.

According to an embodiment of the disclosure, the RFIC 124 may be disposed at least one of the first surface or the second surface.

According to an embodiment of the disclosure, the plurality of first antenna elements 121a-1, 121a-2, 121b-1, 121b-2, 121c-1, 121c-2, 121d-1, and 121d-2 and the plurality of second antenna elements 122a-1, 122a-2, 122b-1, 122b-2, 122c-1, 122c-2, 122d-1, and 122d-2 may be formed in the same form.

According to an embodiment of the disclosure, the plurality of first antenna elements 121a-1, 121a-2, 121b-1, 121b-2, 121c-1, 121c-2, 121d-1, and 121d-2 and the plurality of second antenna elements 122a-1, 122a-2, 122b-1, 122b-2, 122c-1, 122c-2, 122d-1, and 122d-2 may include a dipole antenna, or in examples not forming part of the claimed invention but nonetheless useful for the understanding of the invention a monopole antenna, and/or a slot antenna.

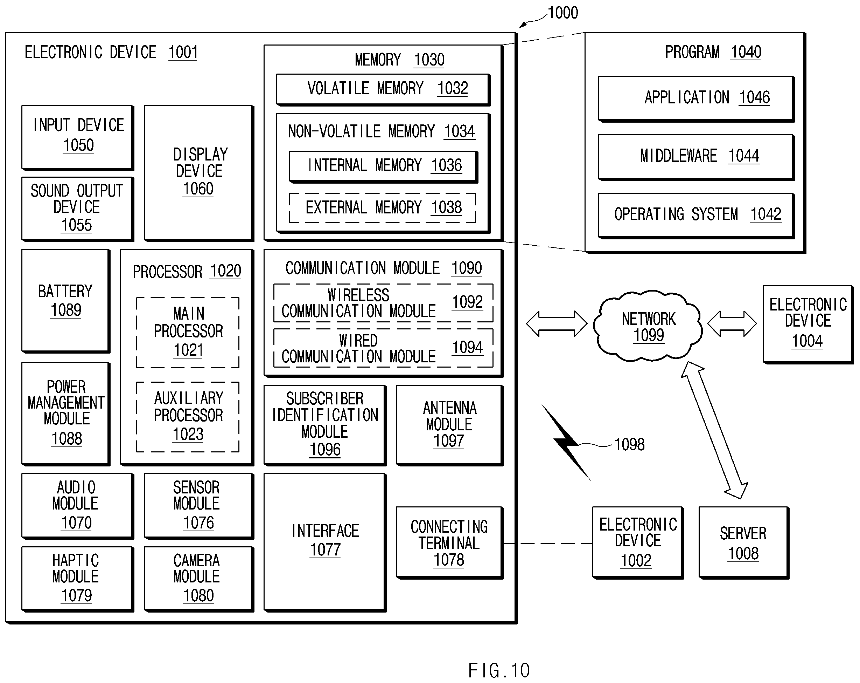

Fig. 10 is a block diagram illustrating an electronic device 1001 in a network environment 1000 according to various embodiments.

Referring to Fig. 10, the electronic device 1001 in the network environment 1000 may communicate with an electronic device 1002 via a first network 1098 (e.g., a short-range wireless communication network), or an electronic device 1004 or a server 1008 via a second network 1099 (e.g., a long-range wireless communication network). According to an embodiment, the electronic device 1001 may communicate with the electronic device 1004 via the server 1008. According to an embodiment, the electronic device 1001 may include a processor 1020, memory 1030, an input device 1050, a sound output device 1055, a display device 1060, an audio module 1070, a sensor module 1076, an interface 1077, a haptic module 1079, a camera module 1080, a power management module 1088, a battery 1089, a communication module 1090, a subscriber identification module(SIM) 1096, or an antenna module 1097. In some embodiments, at least one (e.g., the display device 1060 or the camera module 1080) of the components may be omitted from the electronic device 1001, or one or more other components may be added in the electronic device 1001. In some embodiments, some of the components may be implemented as single integrated circuitry. For example, the sensor module 1076 (e.g., a fingerprint sensor, an iris sensor, or an illuminance sensor) may be implemented as embedded in the display device 1060 (e.g., a display).

The processor 1020 may execute, for example, software (e.g., a program 1040) to control at least one other component (e.g., a hardware or software component) of the electronic device 1001 coupled with the processor 1020, and may perform various data processing or computation. According to one embodiment, as at least part of the data processing or computation, the processor 1020 may load a command or data received from another component (e.g., the sensor module 1076 or the communication module 1090) in volatile memory 1032, process the command or the data stored in the volatile memory 1032, and store resulting data in non-volatile memory 1034. According to an embodiment, the processor 1020 may include a main processor 1021 (e.g., a central processing unit (CPU) or an application processor (AP)), and an auxiliary processor 1023 (e.g., a graphics processing unit (GPU), an image signal processor (ISP), a sensor hub processor, or a communication processor (CP)) that is operable independently from, or in conjunction with, the main processor 1021. Additionally or alternatively, the auxiliary processor 1023 may be adapted to consume less power than the main processor 1021, or to be specific to a specified function. The auxiliary processor 1023 may be implemented as separate from, or as part of the main processor 1021.

The auxiliary processor 1023 may control at least some of functions or states related to at least one component (e.g., the display device 1060, the sensor module 1076, or the communication module 1090) among the components of the electronic device 1001, instead of the main processor 1021 while the main processor 1021 is in an inactive (e.g., sleep) state, or together with the main processor 1021 while the main processor 1021 is in an active state (e.g., executing an application). According to an embodiment, the auxiliary processor 1023 (e.g., an image signal processor or a communication processor) may be implemented as part of another component (e.g., the camera module 1080 or the communication module 1090) functionally related to the auxiliary processor 1023.

The memory 1030 may store various data used by at least one component (e.g., the processor 1020 or the sensor module 1076) of the electronic device 1001. The various data may include, for example, software (e.g., the program 1040) and input data or output data for a command related thereto. The memory 1030 may include the volatile memory 1032 or the non-volatile memory 1034.

The program 1040 may be stored in the memory 1030 as software, and may include, for example, an operating system (OS) 1042, middleware 1044, or an application 1046.

The input device 1050 may receive a command or data to be used by other component (e.g., the processor 1020) of the electronic device **1001,** from the outside (e.g., a user) of the electronic device 1001. The input device 1050 may include, for example, a microphone, a mouse, a keyboard, or a digital pen (e.g., a stylus pen).

The sound output device 1055 may output sound signals to the outside of the electronic device 1001. The sound output device 1055 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 1060 may visually provide information to the outside (e.g., a user) of the electronic device 1001. The display device 1060 may include, for example, a display, a hologram device, or a projector and control circuitry to control a corresponding one of the display, hologram device, and projector. According to an embodiment, the display device 1060 may include touch circuitry adapted to detect a touch, or sensor circuitry (e.g., a pressure sensor) adapted to measure the intensity of force incurred by the touch.

The audio module 1070 may convert a sound into an electrical signal and vice versa. According to an embodiment, the audio module 1070 may obtain the sound via the input device 1050, or output the sound via the sound output device 1055 or a headphone of an external electronic device (e.g., an electronic device 1002) directly (e.g., wiredly) or wirelessly coupled with the electronic device 1001.

The sensor module 1076 may detect an operational state (e.g., power or temperature) of the electronic device 1001 or an environmental state (e.g., a state of a user) external to the electronic device 1001, and then generate an electrical signal or data value corresponding to the detected state. According to an embodiment, the sensor module 1076 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1077 may support one or more specified protocols to be used for the electronic device 1001 to be coupled with the external electronic device (e.g., the electronic device 1002) directly (e.g., wiredly) or wirelessly. According to an embodiment, the interface 1077 may include, for example, a high definition multimedia interface (HDMI), a universal serial bus (USB) interface, a secure digital (SD) card interface, or an audio interface.

A connecting terminal 1078 may include a connector via which the electronic device 1001 may be physically connected with the external electronic device (e.g., the electronic device 1002). According to an embodiment, the connecting terminal 1078 may include, for example, a HDMI connector, a USB connector, a SD card connector, or an audio connector (e.g., a headphone connector).

The haptic module 1079 may convert an electrical signal into a mechanical stimulus (e.g., a vibration or a movement) or electrical stimulus which may be recognized by a user via his tactile sensation or kinesthetic sensation. According to an embodiment, the haptic module 1079 may include, for example, a motor, a piezoelectric element, or an electric stimulator.

The camera module 1080 may capture a still image or moving images. According to an embodiment, the camera module 1080 may include one or more lenses, image sensors, image signal processors, or flashes.

The power management module 1088 may manage power supplied to the electronic device 1001. According to one embodiment, the power management module 1088 may be implemented as at least part of, for example, a power management integrated circuit (PMIC).

The battery 1089 may supply power to at least one component of the electronic device 1001. According to an embodiment, the battery 1089 may include, for example, a primary cell which is not rechargeable, a secondary cell which is rechargeable, or a fuel cell.

The communication module 1090 may support establishing a direct (e.g., wired) communication channel or a wireless communication channel between the electronic device 1001 and the external electronic device (e.g., the electronic device 1002, the electronic device 1004, or the server 1008) and performing communication via the established communication channel. The communication module 1090 may include one or more communication processors that are operable independently from the processor 1020 (e.g., the application processor (AP)) and supports a direct (e.g., wired) communication or a wireless communication. According to an embodiment, the communication module 1090 may include a wireless communication module 1092 (e.g., a cellular communication module, a short-range wireless communication module, or a global navigation satellite system (GNSS) communication module) or a wired communication module 1094 (e.g., a local area network (LAN) communication module or a power line communication (PLC) module). A corresponding one of these communication modules may communicate with the external electronic device via the first network 1098 (e.g., a short-range communication network, such as Bluetooth^{™}, wireless-fidelity (Wi-Fi) direct, or infrared data association (IrDA)) or the second network 1099 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1092 may identify and authenticate the electronic device 1001 in a communication network, such as the first network 1098 or the second network 1099, using subscriber information (e.g., international mobile subscriber identity (IMSI)) stored in the subscriber identification module 1096.

The antenna module 1097 may transmit or receive a signal or power to or from the outside (e.g., the external electronic device) of the electronic device 1001. According to an embodiment, the antenna module 1097 may include an antenna including a radiating element composed of a conductive material or a conductive pattern formed in or on a substrate (e.g., PCB). According to an embodiment, the antenna module 1097 may include a plurality of antennas. In such a case, at least one antenna appropriate for a communication scheme used in the communication network, such as the first network 1098 or the second network 1099, may be selected, for example, by the communication module 1090 (e.g., the wireless communication module 1092) from the plurality of antennas. The signal or the power may then be transmitted or received between the communication module 1090 and the external electronic device via the selected at least one antenna. According to an embodiment, another component (e.g., a radio frequency integrated circuit (RFIC)) other than the radiating element may be additionally formed as part of the antenna module 1097.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1001 and the external electronic device 1004 via the server 1008 coupled with the second network 1099. Each of the electronic devices 1002 and 1004 may be a device of a same type as, or a different type, from the electronic device 1001. According to an embodiment, all or some of operations to be executed at the electronic device 1001 may be executed at one or more of the external electronic devices 1002, 1004, or 1008. For example, if the electronic device 1001 should perform a function or a service automatically, or in response to a request from a user or another device, the electronic device 1001, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1001. The electronic device 1001 may provide the outcome, with or without further processing of the outcome, as at least part of a reply to the request. To that end, a cloud computing, distributed computing, or client-server computing technology may be used, for example.

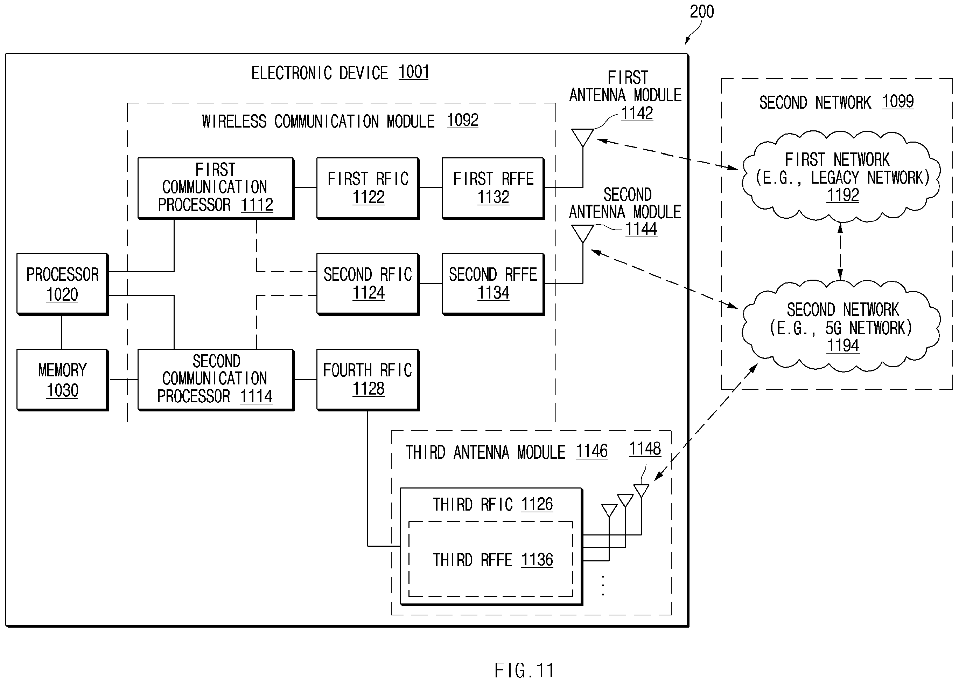

FIG. 11 is a block diagram 1100 of an electronic device 1001 for supporting legacy network communication and 5G network communication, according to various embodiments.

Referring to FIG. 11, the electronic device 1001 may include a first communication processor 1112, a second communication processor 1114, a first radio frequency integrated circuit (RFIC) 1122, a second RFIC 1124, a third RFIC 1126, a fourth RFIC 1128, a first radio frequency front end (RFFE) 1132, a second RFFE 1134, a first antenna module 1142, a second antenna module 1144, and an antenna 1148. The electronic device 1001 may further include the processor 1020 and the memory 1030. The network 1099 may include a first network 1192 and a second network 1194. According to another embodiment, the electronic device 1001 may further include at least one component of the components illustrated in FIG. 10, and the network 1099 may further include at least another network. According to an embodiment, the first communication processor 1112, the second communication processor 1114, the first RFIC 1122, the second RFIC 1124, the fourth RFIC 1128, the first RFFE 1132, and the second RFFE 1134 may form at least part of the wireless communication module 1092. According to another embodiment, the fourth RFIC 1128 may be omitted or may be included as a part of the third RFIC 1126.

The first communication processor 1112 may establish a communication channel for a band to be used for wireless communication with the first network 1192 and may support legacy network communication through the established communication channel. According to various embodiments, the first network may be a legacy network including a 2nd generation (2G), 3G, 4G, or long term evolution (LTE) network. The second communication processor 1114 may support the establishment of a communication channel corresponding to a specified band (e.g., about 6 GHz ~ about 60 GHz) among bands to be used for wireless communication with the second network 1194 and 5G network communication via the established communication channel. According to various embodiments, the second network 1194 may be a 5G network defined in 3GPP. Additionally, according to an embodiment, the first communication processor 1112 or the second communication processor 1114 may establish a communication channel corresponding to another specified band (e.g., approximately 6 GHz or lower) of the bands to be used for wireless communication with the second network 1194 and may support 5G network communication through the established communication channel. According to an embodiment, the first communication processor 1112 and the second communication processor 1114 may be implemented in a single chip or a single package. According to various embodiments, the first communication processor 1112 or the second communication processor 1114 may be implemented in a single chip or a single package together with the processor 1020, the auxiliary processor 1023, or the communication module 1090.

In the case of transmitting a signal, the first RFIC 1122 may convert a baseband signal generated by the first communication processor 1112 into a radio frequency (RF) signal of approximately 700 MHz to approximately 3 GHz that is used in the first network 1192 (e.g., a legacy network). In the case of receiving a signal, an RF signal may be obtained from the first network 1192 (e.g., a legacy network) through an antenna (e.g., the first antenna module 1142) and may be preprocessed through an RFFE (e.g., the first RFFE 1132). The first RFIC 1122 may convert the preprocessed RF signal to a baseband signal so as to be processed by the first communication processor 1112.

In the case of transmitting a signal, the second RFIC 1124 may convert a baseband signal generated by the first communication processor 1112 or the second communication processor 1114 into an RF signal (hereinafter referred to as a "5G Sub6 RF signal") in a Sub6 band (e.g., approximately 6 GHz or lower) used in the second network 1194 (e.g., a 5G network). In the case of receiving a signal, the 5G Sub6 RF signal may be obtained from the second network 1194 (e.g., a 5G network) through an antenna (e.g., the second antenna module 1144) and may be preprocessed through an RFFE (e.g., the second RFFE 1134). The second RFIC 1124 may convert the preprocessed 5G Sub6 RF signal into a baseband signal so as to be processed by a corresponding communication processor of the first communication processor 1112 or the second communication processor 1114.

The third RFIC 1126 may convert a baseband signal generated by the second communication processor 1114 into an RF signal (hereinafter referred to as a "5G Above6 RF signal") in a 5G Above6 band (e.g., approximately 6 GHz to approximately 60 GHz) to be used in the second network 1194 (e.g., a 5G network). In the case of receiving a signal, the 5G Above6 RF signal may be obtained from the second network 1194 (e.g., a 5G network) through an antenna (e.g., the antenna 1148) and may be preprocessed through a third RFFE 1136. The third RFIC 1126 may convert the preprocessed 5G Above 6 RF signal to a baseband signal so as to be processed by the second communication processor 1114. According to an embodiment, the third RFFE 1136 may be implemented as a part of the third RFIC 1126.

According to an embodiment, the electronic device 1001 may include the fourth RFIC 1128 independently of the third RFIC 1126 or as at least a part of the third RFIC 1126. In this case, the fourth RFIC 1128 may convert a baseband signal generated by the second communication processor **1114** into an RF signal (hereinafter referred to as an "IF signal") in an intermediate frequency band (e.g., approximately 9 GHz to approximately **11** GHz) and may provide the IF signal to the third RFIC 1126. The third RFIC 1126 may convert the IF signal into the 5G Above6 RF signal. In the case of receiving a signal, the 5G Above6 RF signal may be received from the second network 1194 (e.g., a 5G network) through an antenna (e.g., the antenna 1148) and may be converted into an IF signal by the third RFIC 1126. The fourth RFIC 1128 may convert the IF signal into a baseband signal to be processed by the second communication processor 1114.

According to an embodiment, the first RFIC 1122 and the second RFIC 1124 may be implemented with a part of a single package or a single chip. According to an embodiment, the first RFFE 1132 and the second RFFE 1134 may be implemented with a part of a single package or a single chip. According to an embodiment, at least one of the first antenna module 1142 or the second antenna module 1144 may be omitted or may be combined with any other antenna module to process RF signals in a plurality of bands.

According to an embodiment, the third RFIC 1126 and the antenna 1148 may be disposed at the same substrate to form a third antenna module 1146. For example, the wireless communication module 1092 or the processor 1020 may be disposed at a first substrate (e.g., a main PCB). In this case, the third RFIC 1126 may be disposed in a partial region (e.g., a bottom surface) of a second substrate (e.g., sub PCB) separately of the first substrate; the antenna 1148 may be disposed in another partial region (e.g., an upper surface), and thus the third antenna module 1146 may be formed. According to an embodiment, the antenna 1148 may include, for example, an antenna array to be used for beamforming. As the third RFIC 1126 and the antenna 1148 are disposed on the same substrate, it may be possible to decrease a length of a transmission line between the third RFIC 1126 and the antenna 1148. For example, the decrease in the transmission line may make it possible to prevent a signal in a high-frequency band (e.g., approximately 6 GHz to approximately 60 GHz) used for the 5G network communication from being lost (or attenuated) due to the transmission line. As such, the electronic device 1001 may improve the quality or speed of communication with the second network 1194 (e.g., a 5G network).

The second network 1194 (e.g., a 5G network) may be used independently of the first network 1192 (e.g., a legacy network) (e.g., stand-alone (SA)) or may be used in conjunction with the first network 1192 (e.g., non-stand alone (NSA)). For example, only an access network (e.g., a 5G radio access network (RAN) or a next generation RAN (NG RAN)) may be present in the 5G network, and a core network (e.g., a next generation core (NGC)) may be absent from the 5G network. In this case, the electronic device 1001 may access the access network of the 5G network and may then access an external network (e.g., Internet) under control of a core network (e.g., an evolved packed core (EPC)) of the legacy network. Protocol information (e.g., LTE protocol information) for communication with the legacy network or protocol information (e.g., New Radio (NR) protocol information) for communication with the 5G network may be stored in the memory 1130 so as to be accessed by any other component (e.g., the processor 1020, the first communication processor 1112, or the second communication processor 1114).

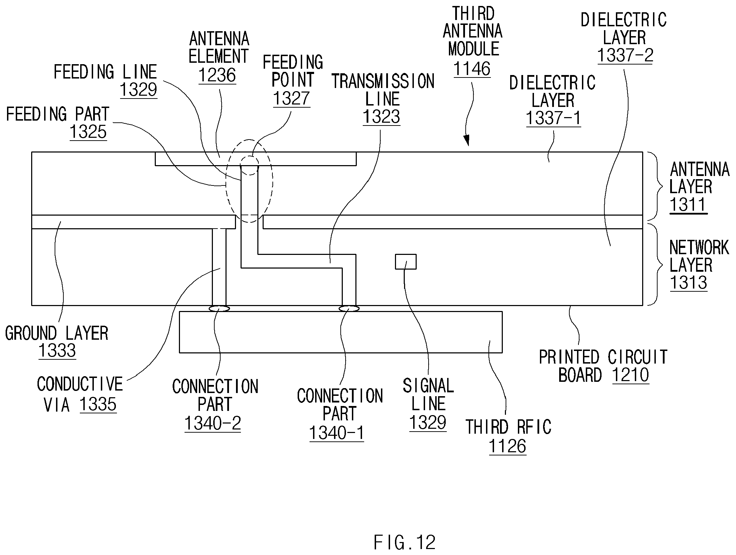

FIG. 12 is a cross-sectional view of a third antenna module according to an example not forming part of the claimed invention but nonetheless useful for the understanding of the invention.

An antenna layer 1311 may include at least one dielectric layer 1337-1, and an antenna element 1236 and/or a feeding part 1325 formed on an outer surface of the dielectric layer 1337-1 or therein. The feeding part 1325 may include a feeding point 1327 and/or a feeding line 1329.

A network layer 1313 may include at least one dielectric layer 1337-2; and at least one ground layer 1333, at least one conductive via 1335, a transmission line 1323, and/or a signal line 1329 formed on an outer surface of the dielectric layer 1337-2 or therein.

In addition, in the example illustrated, the third RFIC 1126 may be electrically connected with the network layer 1313, for example, through first and second connection parts (e.g., solder bumps) 1340-1 and a40-2. In other embodiments, various connection structures (e.g., soldering or a ball grid array (BGA)) may be utilized instead of the connection part. The third RFIC 1126 may be electrically connected with the antenna element 1236 through the first connection part 1340-1, the transmission line 1323, and the feeding part 1325. Also, the third RFIC 1126 may be electrically connected with the ground layer 1333 through the second connection part 1340-2 and the conductive via 1335. Although not illustrated, the third RFIC 1126 may also be electrically connected with the above module interface through the signal line 1329.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1040) including one or more instructions that are stored in a storage medium (e.g., internal memory 1036 or external memory 1038) that is readable by a machine (e.g., the electronic device 1001). For example, a processor(e.g., the processor 1020) of the machine (e.g., the electronic device 1001) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An antenna module (120) comprising:
a printed circuit board (123);
a first antenna array (121) disposed on one surface of the printed circuit board (123);
a second antenna array (122) disposed on another surface of the printed circuit board (123) and at least partially overlapping with the first antenna array when viewed from above the printed circuit board (123), wherein each of the first antenna array (121) and the second antenna array (122) includes a plurality of dipole antennas; and
a radio frequency integrated circuit, RFIC, (124) electrically connected to the first antenna array (121) and the second antenna array (122),
wherein the RFIC (124) is configured to:
feed the first antenna array (121) and the second antenna array (122) such that a phase difference between the first antenna array (121) and the second antenna array (122) has a specified value, and
transmit and/or receive a second signal in a direction of a beam via the first antenna array (121) and the second antenna array (122), wherein the direction of the beam is dependent on the specified value; and
wherein the direction of the beam includes:
a first direction parallel to the one surface; and
a second direction perpendicular to the one surface.

2. The antenna module (120) of claim 1, wherein the first antenna array (121) is spaced from the second antenna array (122) by a specified distance.

3. The antenna module (120) of claim 1, further comprising:
a feeding line (125) for connecting the RFIC (124) to the first antenna array (121) and the second antenna array (122).

4. The antenna module (120) of claim 1, wherein the RFIC (124) is configured to:
feed the first antenna array (121) and the second antenna array (122) in-phase to transmit the second signal in the first direction; or
feed the first antenna array (121) and the second antenna array (122) out-of-phase to transmit the second signal in the second direction.

5. An electronic device (100) comprising:
a housing (110); and
the antenna module (120) of any one of claims 1 to 4 disposed on one surface of the housing (110), and wherein the RFIC (124) is configured to:
receive a first signal from an external device;
determine an orientation of the external device and the electronic device (100) based on the received first signal;
based on the determined orientation, feed the first antenna array (121) and the second antenna array (122) such that the phase difference has the specific value; and
transmit the second signal in the direction of the beam towards the external device.

6. The electronic device (100) of claim 5, wherein the first antenna array (121) is spaced from the second antenna (122) array by a specified distance.

7. The electronic device (100) of claim 5, wherein the antenna module (120) is disposed in a region adjacent to a first edge of the housing (110),
further comprising:
an additional antenna module (130) disposed in a region adjacent to a second edge opposite to the first edge.

8. The electronic device (100) of claim 5, wherein the antenna module (120) further includes a feeding line for connecting the RFIC (124) to the first antenna array (121) and the second antenna array (122).

9. The electronic device (100) of claim 5, wherein the RFIC (124) is configured to feed each of the plurality of dipole antennas such that a phase difference between the plurality of dipole antennas occurs.

10. The electronic device (100) of claim 5, wherein the plurality of dipole antennas are spaced from one another by a specified distance.

## Patentansprüche

1. Antennenmodul (120), umfassend:
eine Leiterplatte (123);
eine erste Gruppenantenne (121), die auf einer Oberfläche der Leiterplatte (123) angeordnet ist;
eine zweite Gruppenantenne (122), die auf einer anderen Oberfläche der Leiterplatte (123) angeordnet ist und zumindest teilweise mit der ersten Gruppenantenne überlappt, wenn sie von oberhalb der Leiterplatte (123) betrachtet wird, wobei jede von der ersten Gruppenantenne (121) und der zweiten Gruppenantenne (122) eine Vielzahl von Dipolantennen beinhaltet; und
eine integrierte Hochfrequenzschaltung, RFIC, (124), die elektrisch mit der ersten Gruppenantenne (121) und der zweiten Gruppenantenne (122) verbunden ist,
wobei die RFIC (124) konfiguriert ist zum:
Speisen der ersten Gruppenantenne (121) und der zweiten Gruppenantenne (122) derart, dass eine Phasendifferenz zwischen der ersten Gruppenantenne (121) und der zweiten Gruppenantenne (122) einen bestimmten Wert aufweist, und
Senden und/oder Empfangen eines zweiten Signals in einer Richtung eines Strahls über die erste Gruppenantenne (121) und die zweite Gruppenantenne (122), wobei die Richtung des Strahls von dem bestimmten Wert abhängig ist; und
wobei die Richtung des Strahls Folgendes beinhaltet:
eine erste Richtung parallel zu der einen Oberfläche; und
eine zweite Richtung senkrecht zu der einen Oberfläche.

2. Antennenmodul (120) nach Anspruch 1, wobei die erste Gruppenantenne (121) von der zweiten Gruppenantenne (122) um einen bestimmten Abstand beabstandet ist.

3. Antennenmodul (120) nach Anspruch 1, ferner umfassend:
eine Speiseleitung (125) zum Verbinden der RFIC (124) mit der ersten Gruppenantenne (121) und der zweiten Gruppenantenne (122).

4. Antennenmodul (120) nach Anspruch 1, wobei die RFIC (124) konfiguriert ist zum:
Speisen der ersten Gruppenantenne (121) und der zweiten Gruppenantenne (122) in Phase, um das zweite Signal in der ersten Richtung zu senden; oder
Speisen der ersten Gruppenantenne (121) und der zweiten Gruppenantenne (122) phasenverschoben, um das zweite Signal in der zweiten Richtung zu senden.

5. Elektronisches Gerät (100), umfassend:
ein Gehäuse (110); und
das Antennenmodul (120) nach einem der Ansprüche 1 bis 4, das auf einer Oberfläche des Gehäuses (110) angeordnet ist, und wobei die RFIC (124) konfiguriert ist zum:
Empfangen eines ersten Signals von einem externen Gerät;
Bestimmen einer Ausrichtung des externen Geräts und des elektronischen Geräts (100) basierend auf dem empfangenen ersten Signal;
basierend auf der bestimmten Ausrichtung, Speisen der ersten Gruppenantenne (121) und der zweiten Gruppenantenne (122) derart, dass die Phasendifferenz den bestimmten Wert aufweist; und
Senden des zweiten Signals in der Richtung des Strahls zu dem externen Gerät.

6. Elektronisches Gerät (100) nach Anspruch 5, wobei die erste Gruppenantenne (121) von der zweiten Gruppenantenne (122) um einen bestimmten Abstand beabstandet ist.

7. Elektronisches Gerät (100) nach Anspruch 5, wobei das Antennenmodul (120) in einem Bereich benachbart zu einem ersten Rand des Gehäuses (110) angeordnet ist,
ferner umfassend:
ein zusätzliches Antennenmodul (130), das in einem Bereich benachbart zu einem zweiten Rand gegenüber dem ersten Rand angeordnet ist.

8. Elektronisches Gerät (100) nach Anspruch 5, wobei das Antennenmodul (120) ferner eine Speiseleitung zum Verbinden der RFIC (124) mit der ersten Gruppenantenne (121) und der zweiten Gruppenantenne (122) beinhaltet.

9. Elektronisches Gerät (100) nach Anspruch 5, wobei die RFIC (124) so konfiguriert ist, dass sie jede der Vielzahl von Dipolantennen derart speist, dass eine Phasendifferenz zwischen der Vielzahl von Dipolantennen auftritt.

10. Elektronisches Gerät (100) nach Anspruch 5, wobei die Vielzahl von Dipolantennen um einen bestimmten Abstand voneinander beabstandet sind.

## Revendications

1. Module d'antenne (120) comprenant :
une carte de circuit imprimé (123) ;
un premier réseau d'antennes (121) disposé sur une surface de la carte de circuit imprimé (123) ;
un second réseau d'antennes (122) disposé sur une autre surface de la carte de circuit imprimé (123) et chevauchant au moins partiellement le premier réseau d'antennes lorsqu'il est vu depuis le dessus de la carte de circuit imprimé (123), chacun du premier réseau d'antennes (121) et du second réseau d'antennes (122) comprenant une pluralité d'antennes dipôles ; et
un circuit intégré à radiofréquences, RFIC, (124) connecté électriquement au premier réseau d'antennes (121) et au second réseau d'antennes (122),
ledit RFIC (124) étant configuré pour :
alimenter le premier réseau d'antennes (121) et le second réseau d'antennes (122) de sorte qu'une différence de phase entre le premier réseau d'antennes (121) et le second réseau d'antennes (122) possède une valeur spécifiée, et
émettre et/ou recevoir un second signal dans une direction d'un faisceau par l'intermédiaire du premier réseau d'antennes (121) et du second réseau d'antennes (122), ladite direction du faisceau dépendant de la valeur spécifiée ; et
ladite direction du faisceau comprenant :
une première direction parallèle à ladite surface ; et
une seconde direction perpendiculaire à ladite surface.

2. Module d'antenne (120) de la revendication 1, ledit premier réseau d'antennes (121) étant espacé du second réseau d'antennes (122) d'une distance spécifiée.

3. Module d'antenne (120) de la revendication 1, comprenant en outre :
une ligne d'alimentation (125) destinée à connecter le RFIC (124) au premier réseau d'antennes (121) et au second réseau d'antennes (122).

4. Module d'antenne (120) de la revendication 1, ledit RFIC (124) étant configuré pour :
alimenter le premier réseau d'antennes (121) et le second réseau d'antennes (122) en phase pour transmettre le second signal dans la première direction ; ou
alimenter le premier réseau d'antennes (121) et le second réseau d'antennes (122) en déphasage pour transmettre le second signal dans la seconde direction.

5. Dispositif électronique (100) comprenant :
un boîtier (110) ; et
le module d'antenne (120) de l'une quelconque des revendications 1 à 4 disposé sur une surface du boîtier (110), et ledit RFIC (124) étant configuré pour :
recevoir un premier signal en provenance d'un dispositif externe ;
déterminer une orientation du dispositif externe et du dispositif électronique (100) sur la base du premier signal reçu ;
sur la base de l'orientation déterminée, alimenter le premier réseau d'antennes (121) et le second réseau d'antennes (122) de sorte que la différence de phase possède la valeur spécifique ; et
transmettre le second signal dans la direction du faisceau vers le dispositif externe.

6. Dispositif électronique (100) de la revendication 5, ledit premier réseau d'antennes (121) étant espacé du second réseau d'antennes (122) d'une distance spécifiée.

7. Dispositif électronique (100) de la revendication 5, ledit module d'antenne (120) étant disposé dans une zone adjacente à un premier bord du boîtier (110),
comprenant en outre :
un module d'antenne supplémentaire (130) disposé dans une zone adjacente à un second bord opposé au premier bord.

8. Dispositif électronique (100) de la revendication 5, ledit module d'antenne (120) comprenant en outre une ligne d'alimentation destinée à connecter le RFIC (124) au premier réseau d'antennes (121) et au second réseau d'antennes (122).

9. Dispositif électronique (100) de la revendication 5, ledit RFIC (124) étant configuré pour alimenter chacune de la pluralité d'antennes dipôles de sorte qu'une différence de phase entre la pluralité d'antennes dipôles se produise.

10. Dispositif électronique (100) de la revendication 5, ladite pluralité d'antennes dipôles étant espacées les unes des autres d'une distance spécifiée.
